# DEMANDE DE BREVET EUROPEEN

(11) **EP 3 970 477 A1**
(43) Date de publication de la demande: **23.03.2022**
(21) Numéro de dépôt: 21197192.4
(22) Date de dépôt: 16.09.2021
(51) Int. Cl.: A01G 9/12, A01G 17/10

(54) **PORTE-BOUQUET POUR PLANT DE TOMATES**

(30) Priorité: 16.09.2020 FR 2009372
(71) Demandeur: Gautherot, Philippe, 10110 Buxières sur Arce (FR); Gautherot, Basile, 10110 Buxières sur Arce (FR); Gautherot Peric, Chloé, 10110 Boxieres sur Arce (FR)
(72) Inventeur: Gautherot, Philippe, 10110 Buxières sur Arce (FR); Gautherot, Basile, 10110 Buxières sur Arce (FR); Gautherot Peric, Chloé, 10110 Boxieres sur Arce (FR)
(74) Mandataire: Oudin, Stéphane

(57) **Abrégé**

La présente invention concerne un dispositif de maintien (1) agencé pour maintenir une branche (100) s'étendant d'une tige (101) d'un plant (102) de tomates (103), le dispositif de maintien (1) étant en forme générale de goulotte et **caractérisé** en ce qu'il est élastiquement flexible et comprend une barre rectiligne s'étendant sensiblement sur toute la longueur du dispositif de maintien (1) et des premières pattes de maintien et des deuxièmes pattes de maintien étant disposées espacées entre elles et respectivement de part et d'autre et le long de ladite barre, **en ce que** lesdites premières pattes de maintien et deuxièmes pattes de maintien sont en forme globale de L et comportent chacune respectivement une première aile et une deuxième aile, les deuxièmes ailes des premières et deuxièmes pattes de maintien étant globalement parallèles entre elles et s'étendant dans la même direction, pour définir un logement agencé pour recevoir ladite branche.

## Description

### Domaine technique de l'invention

La présente invention se rapporte au domaine général de la culture, notamment en serre, de plantes dont les branches, qui s'étendent depuis une tige centrale, portent des fruits ou légumes tels que, par exemple, des tomates. Elle vise plus précisément un dispositif de maintien d'une branche d'une plante, notamment d'un plant de tomates.

### Etat de la technique

Dans la culture de plants de tomates notamment, il est connu d'utiliser des dispositifs de maintien, également appelé porte-bouquet, se posant sur les branches dès la floraison du plant de tomates. En effet, au fil de la croissance et du mûrissement des tomates, les branches qui les soutiennent subissent un poids de fruits de plus en plus important. Les branches ainsi sollicitées s'incurvent de plus en plus vers le sol ce qui affecte la circulation de la sève dans la branche, nuisant au développement des fruits. Il arrive également que le surpoids des fruits provoque une incurvation excessive de la branche pouvant aller de jusqu'à la rupture de cette dernière et à la perte des fruits.

L'utilisation de dispositifs de maintien permet de renforcer les branches lors de leur croissance et ainsi de prévenir les ruptures desdites branches sous le poids des tomates et d'assurer une meilleure qualité des tomates et une production accrue.

On connait déjà un certain nombre de dispositifs de maintien tels que ceux divulgués dans la demande de brevet français FR 2 990 326 et la demande de brevet coréen KR 101 894 658, ces derniers se présentant sous la forme d'une goulotte définissant un logement longitudinal apte recevoir la branche, la goulotte encadrant le dessus, le dessous et l'arrière ou l'avant de la branche et étant par ailleurs apte à s'incurver élastiquement sous le poids de la branche dans un plan d'incurvation entre une position au repos dans laquelle l'axe longitudinal est globalement rectiligne et une position de travail dans laquelle l'axe longitudinal est incurvé, ces dispositifs de maintien connus comportant avantageusement des butées mécaniques aptes à limiter l'incurvation de la branche.

Les dispositifs de maintien connus sont certes efficaces mais présentent tout de même un certain nombre d'inconvénients. Certains sont difficiles à mettre en place, d'autres risquent de détériorer la branche lors de leur mise en place et/ou de limiter la possibilité de croissance de la section de la branche est limitée. De plus, la plupart de ces dispositifs de maintien connus est fabriquée dans une matière dont le recyclage représente un surcoût non négligeable.

### Résumé de l'invention

Le but de la présente invention est donc de proposer une alternative aux dispositifs de maintien connus qui soit pérenne, solide et facile à mettre en œuvre sur les branches de la plante sans risque de casser lesdites branches, et qui soit facile à recycler.

Conformément à l'invention, il est donc proposé un dispositif de maintien agencé pour maintenir une branche s'étendant d'une tige d'un plant de tomates, le dispositif de maintien étant en forme générale de goulotte et remarquable en ce qu'il est élastiquement flexible et comprend une barre rectiligne s'étendant sensiblement sur toute la longueur du dispositif de maintien et des premières pattes de maintien et des deuxièmes pattes de maintien étant disposées espacées entre elles et respectivement de part et d'autre et le long de ladite barre, en ce que lesdites premières pattes de maintien et deuxièmes pattes de maintien sont en forme globale de L et comportent chacune respectivement :
- une première aile issue d'une des faces longitudinales de la barre et s'étendant globalement perpendiculairement à l'axe longitudinal de cette dernière, et
- une deuxième aile issue l'extrémité libre de ladite première aile associée et s'étendant globalement perpendiculairement à cette dernière, lesdites deuxièmes ailes des premières pattes de maintien et les deuxièmes ailes des deuxièmes pattes de maintien étant globalement parallèles entre elles et s'étendant dans la même direction, de sorte à définir entre elles un logement agencé pour recevoir ladite branche, et en ce que les premières pattes de maintien sont conformées pour que les faces externes de leurs deuxièmes ailes respectives forment un arc de cylindre de rayon de courbure R1 et les deuxièmes pattes de maintien sont conformées pour que les faces externes de leurs deuxièmes ailes respectives forment un arc de cylindre de rayon de courbure R2 supérieur au rayon de courbure R1.

De manière avantageuse, la barre est de section transversale carrée ou rectangulaire.

L'arc de cylindre de rayon de courbure R1 et l'arc de cylindre de rayon de courbure R2 sont de préférence des arcs de cylindre de révolution coaxiaux.

Le dispositif de maintien comporte avantageusement sur chaque deuxième patte de maintien une fente traversant entièrement sa deuxième aile et une partie de sa première aile.

Selon un mode de réalisation préféré, le dispositif de maintien comporte un talon à l'extrémité libre de chacune des deuxièmes ailes) respectives des premières pattes de maintien, et un talon à l'extrémité libre de chacune des deuxièmes ailes respectives des deuxièmes pattes de maintien, chaque talon étant issu de la face interne respective desdites deuxièmes ailes et s'étendant vers l'intérieur du logement.

De manière avantageuse, le dispositif de maintien comporte, à l'extrémité libre de chacune des deuxièmes ailes des deuxièmes pattes de maintien disposées à chacune des extrémités de la barre et également nommées deuxièmes pattes d'extrémité, une languette issue du bord externe de la deuxième aile associée et s'étendant dans le prolongement de la face externe de de ladite deuxième aile associée et vers l'extérieur dudit dispositif de maintien.

### Brève description des figures

D'autres avantages et caractéristiques ressortiront mieux de la description qui va suivre d'un mode d'exécution de l'invention en référence aux figures annexées sur lesquelles :
[Fig 1] est une vue d'un dispositif de maintien selon l'invention mis en place sur une branche d'un plan de tomates,
[Fig 2] est une vue en perspective du dispositif de maintien de la figure 1,
[Fig 3] est une vue de dessus du dispositif de maintien de la figure 2,
[Fig 4] est une section transversale du dispositif de maintien de la figure 3 selon l'axe IV - IV'.

### Description des modes de réalisation

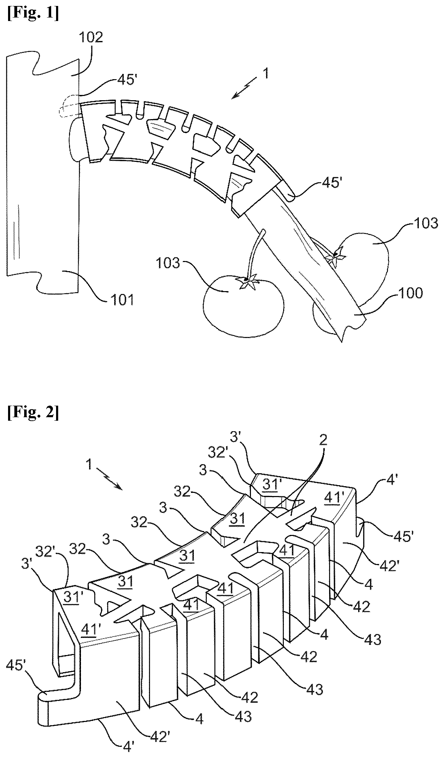

Sur la figure 1, on a représenté un dispositif de maintien 1 selon l'invention mis en place sur une branche 100 s'étendant d'une tige 101 d'un plant 102 de tomates 103.

En référence aux figures 2 à 4, ledit dispositif de maintien 1 est en forme générale de goulotte. Cette goulotte comprend par une barre 2 rectiligne, avantageusement de section transversale carrée ou rectangulaire, s'étendant sensiblement sur toute la longueur du dispositif de maintien 1 et des premières pattes de maintien 3,3' et des deuxièmes pattes de maintien 4,4' étant disposées respectivement de part et d'autre et le long de ladite barre 2.

Les premières pattes de maintien 3,3' sont espacées entre elles et disposées de sorte que les premières pattes de maintien 3 soient situées entre les deux premières pattes de maintien 3' elles-mêmes disposées à chacune des extrémités de la barre 2 et également nommées ci-après premières pattes d'extrémité 3'. Les deuxièmes pattes de maintien 4,4' sont également espacées entre elles et disposées de sorte que les deuxièmes pattes de maintien 4 soient situées entre les deux deuxièmes pattes de maintien 4' elles-mêmes disposées à chacune des extrémités de la barre 2 et également nommées ci-après deuxièmes pattes d'extrémité 4'.

Les premières pattes de maintien 3 et les premières pattes d'extrémité 3' sont en forme globale de L et comportent chacune respectivement :
- une première aile 31,31' issue d'une des faces longitudinales de la barre 2 et s'étendant globalement perpendiculairement à l'axe longitudinal de cette dernière, et
- une deuxième aile 32,32' issue l'extrémité libre de ladite première aile 31,31' associée et s'étendant globalement perpendiculairement à cette dernière.

On désigne ici par "globalement perpendiculaires" ou "globalement parallèles" deux éléments ou parties d'élément faisant entre eux respectivement un angle compris entre 60 et 120 degrés et un angle compris -30 et 30 degrés.

Les deuxièmes pattes de maintien 4 et les deuxièmes pattes d'extrémité 4' sont également en forme globale de L et comportent chacune respectivement :
- une première aile 41,41' issue le face longitudinale de la barre 2 située du côté opposé aux premières ailes 31,31' respectives des premières pattes de maintien 3 et des premières pattes d'extrémité 3', et s'étendant globalement perpendiculairement à l'axe longitudinal de ladite barre 2, et
- une deuxième aile 42,42' issue l'extrémité libre de ladite première aile 41,41' associée et s'étendant globalement perpendiculairement à cette dernière.

Les deuxièmes ailes 32,32' des premières pattes de maintien 3 et des premières pattes d'extrémité 3' et les deuxièmes ailes 42,42' des deuxièmes pattes de maintien 4 et des deuxièmes pattes d'extrémité 4' sont globalement parallèles entre elles et s'étendent dans la même direction, de sorte à définir entre elles un logement 5 apte à recevoir la branche 100 du plant 102 de tomates 103 (Cf. figure 1).

Par ailleurs, les premières pattes de maintien 3 et les premières pattes d'extrémité 3' sont conformées pour que les faces externes de leurs deuxièmes ailes 32,32' respectives forment un arc de cylindre de rayon de courbure R1 et les deuxièmes pattes de maintien 4 et les deuxièmes pattes d'extrémité 4' sont conformées pour que les faces externes de leurs deuxièmes ailes 42,42' respectives forment un arc de cylindre de rayon de courbure R2 supérieur au rayon de courbure R1, l'arc de cylindre de rayon de courbure R1 et l'arc de cylindre de rayon de courbure R2 étant avantageusement des arcs de cylindre de révolution coaxiaux.

On désigne ici par arc de cylindre de révolution un arc de cylindre dont la section transversale est un arc de cercle. Toutefois, les faces externes de leurs deuxièmes ailes 32,32' et les deuxièmes ailes 42,42' pourront forment un arc de cylindre autre qu'un arc de cylindre révolution sans sortir du cadre de la présente invention.

De même, on désigne ici par "externe" tout élément ou partie d'élément du dispositif de maintien 1 selon l'invention situé du côté opposé au logement 5 et par "interne" tout élément ou partie d'élément situé du côté du logement 5.

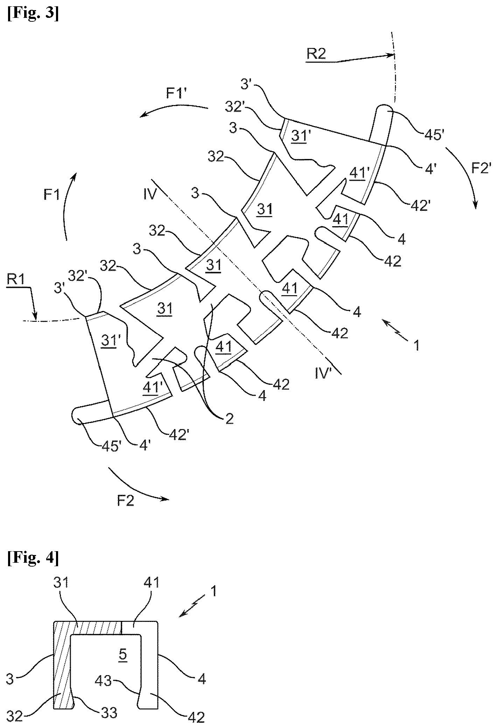

Ledit dispositif de maintien 1 selon l'invention est élastiquement flexible pour permettre :
- une première incurvation, selon les flèches F1, F1' de la figure 3, laquelle les deuxièmes ailes 32,32' respectives des premières pattes de maintien 3 et des premières pattes d'extrémité 3' se resserrent jusqu'à venir en contact les unes des autres de sorte à limiter ladite première incurvation afin d'éviter la rupture dudit dispositif de maintien 1, et
- une deuxième incurvation, selon les flèches F2, F2' de la figure 3, laquelle les deuxièmes ailes 42,42' respectives des deuxièmes pattes de maintien 4 et des deuxièmes pattes d'extrémité 4' se resserrent jusqu'à venir en contact les unes des autres de sorte à limiter ladite deuxième incurvation, afin d'éviter la rupture dudit dispositif de maintien 1.

On comprend bien que ladite première incurvation facilite la mise en place du dispositif de maintien 1 selon l'invention sur une branche sensiblement rectiligne, alors que la deuxième incurvation permet à la branche de s'incurver sous le poids des fruits, sans risque de rupture.

De même, on comprend bien que la barre 2 du dispositif de maintien 1 fait office de "colonne vertébrale" et tend à redevenir rectiligne, une fois ledit dispositif de maintien 1 retiré de la branche 100, de sorte à ramener ce dernier dans la position représentée à la figure 3 et à faciliter sa remise en place sur la même branche 100 ou une autre branche.

En outre pour avoir plus de flexibilité et favoriser les première et deuxième incurvations, le dispositif de maintien 1 comporte avantageusement sur chaque deuxième patte de maintien 4 une fente 43 traversant entièrement sa deuxième aile 42 et une partie de sa première aile 41.

Par ailleurs, pour garantir son bon maintien sur une branche 100, le dispositif de maintien 1 selon l'invention comporte avantageusement un talon 33 à l'extrémité libre de chacune des deuxièmes ailes 32,32' respectives des premières pattes de maintien 3 et des deuxièmes pattes d'extrémité 3', et un talon 44 à l'extrémité libre de chacune des deuxièmes ailes 42,42' respectives des deuxièmes pattes de maintien 4 et des deuxièmes pattes d'extrémité 4', chaque talon 33,43 étant issu de la face interne respective desdites deuxièmes ailes 32,32' ; 42,42' et s'étendant vers l'intérieur du logement 5.

De même, pour des raisons analogues, le dispositif de maintien 1 selon l'invention comporte avantageusement une languette 45' à l'extrémité libre de chacune des deuxièmes ailes 42' des deuxièmes pattes d'extrémité 4', chaque languette 45' étant issue du bord externe de la deuxième aile 42' associée et s'étendant dans le prolongement de la face externe de de ladite deuxième aile 42' associée et vers l'extérieur dudit dispositif de maintien 1. Cette languette 45', représentée en pointillé sur la figure 1, vient se placer derrière la tige 101 d'un plant 102 de tomates 103, lorsque le dispositif de maintien 1 est mis en place sur la branche 100 dudit plant 102, pour éviter le retrait intempestif dudit dispositif de maintien 1.

Avec cette configuration, le dispositif de maintien 1 selon l'invention peut être avantageusement réalisé à partir d'une matière non oxydante, biodégradable et non polluante afin de favoriser le recyclage dudit dispositif de maintien 1.

Le dispositif de maintien 1 sera donc de préférence réalisé en matière synthétique polymère du type polyamide telle que, par exemple, le polycaprolactame (PA6) et/ou polyoxyméthylène (POM).

Par ailleurs, le dispositif de maintien 1 pourra également être réalisé à partir d'une matière 100% végétale, afin d'éviter tout risque de pollution du sol notamment.

De plus, le dispositif de maintien 1 est avantageusement réalisé par moulage et ne présente pas d'arêtes tranchantes susceptibles d'endommager voire de sectionner la branche 100 et/ou la tige 101 du plant 102 de tomates 103.

Le dispositif de maintien 1 selon l'invention est particulièrement destiné aux plants 102 de tomates 103, mais il pourra également être pour la culture, notamment en serre, de plantes dont les branches, qui s'étendent depuis une tige centrale, portent des fruits ou légumes.

Enfin, il va de soi que les exemples de dispositif de maintien 1 conformes à l'invention qui viennent d'être décrits ne sont que des illustrations particulières, en aucun cas limitatives de l'invention.

## Revendications

1. Dispositif de maintien (1) agencé pour maintenir une branche (100) s'étendant d'une tige (101) d'un plant (102) de tomates (103), le dispositif de maintien (1) étant en forme générale de goulotte et **caractérisé en ce qu'**il est élastiquement flexible et comprend une barre (2) rectiligne s'étendant sensiblement sur toute la longueur du dispositif de maintien (1) et des premières pattes de maintien (3,3') et des deuxièmes pattes de maintien (4,4') étant disposées espacées entre elles et respectivement de part et d'autre et le long de ladite barre (2),
**en ce que** lesdites premières pattes de maintien (3,3') et deuxièmes pattes de maintien (4,4') sont en forme globale de L et comportent chacune respectivement :
- une première aile (31,31' ; 41,41') issue d'une des faces longitudinales de la barre (2) et s'étendant globalement perpendiculairement à l'axe longitudinal de cette dernière, et
- une deuxième aile (32,32' ; 42,42') issue l'extrémité libre de ladite première aile (31,31' ; 41,41') associée et s'étendant globalement perpendiculairement à cette dernière, lesdites deuxièmes ailes (32,32') des premières pattes de maintien (3,3') et les deuxièmes ailes (42,42') des deuxièmes pattes de maintien (4,4') étant globalement parallèles entre elles et s'étendant dans la même direction, de sorte à définir entre elles un logement (5) agencé pour recevoir ladite branche (100),
et
**en ce que** les premières pattes de maintien (3,3') sont conformées pour que les faces externes de leurs deuxièmes ailes (32,32') respectives forment un arc de cylindre de rayon de courbure R1 et les deuxièmes pattes de maintien (4,4') sont conformées pour que les faces externes de leurs deuxièmes ailes (42,42') respectives forment un arc de cylindre de rayon de courbure R2 supérieur au rayon de courbure R1.

2. Dispositif de maintien (1) selon la revendication 1 **caractérisé en ce que** la barre (2) est de section transversale carrée ou rectangulaire.

3. Dispositif de maintien (1) selon l'une quelconque des revendications 1 ou 2 **caractérisé en ce que** l'arc de cylindre de rayon de courbure R1 et l'arc de cylindre de rayon de courbure R2 sont des arcs de cylindre de révolution coaxiaux.

4. Dispositif de maintien (1) selon l'une quelconque des revendications 1 à 3 **caractérisé en ce qu'**il comporte sur chaque deuxième patte de maintien (4) une fente (43) traversant entièrement sa deuxième aile (42) et une partie de sa première aile (41).

5. Dispositif de maintien (1) selon l'une quelconque des revendications 1 à 4 **caractérisé en ce qu'**il comporte un talon (33) à l'extrémité libre de chacune des deuxièmes ailes (32,32') respectives des premières pattes de maintien (3,3'), et un talon (44) à l'extrémité libre de chacune des deuxièmes ailes (42,42') respectives des deuxièmes pattes de maintien (4,4'), chaque talon (33,43) étant issu de la face interne respective desdites deuxièmes ailes (32,32' ; 42,42') et s'étendant vers l'intérieur du logement (5).

6. Dispositif de maintien (1) selon l'une quelconque des revendications 1 à 5 **caractérisé en ce qu'**il comporte, à l'extrémité libre de chacune des deuxièmes ailes (42') des deuxièmes pattes de maintien (4') disposées à chacune des extrémités de la barre (2) et également nommées deuxièmes pattes d'extrémité (4'), une languette (45') issue du bord externe de la deuxième aile (42') associée et s'étendant dans le prolongement de la face externe de de ladite deuxième aile (42') associée et vers l'extérieur dudit dispositif de maintien (1).
